# EUROPEAN PATENT APPLICATION

(11) **EP 2 717 200 A1**
(43) Date of publication of application: **09.04.2014**
(21) Application number: 11858471.3
(22) Date of filing: 01.07.2011
(51) Int. Cl.: G06Q 10/00

(54) **PORTABLE TERMINAL ADMINISTRATION SERVER AND PORTABLE TERMINAL ADMINISTRATION PROGRAM**

(71) Applicant: IPS Co., Ltd., Kobe-shi, Hyogo 650-0044 (JP)
(72) Inventor: AKITA, Toshifumi, Kobe-shi Hyogo 650-0044 (JP)
(74) Representative: Korenberg, Alexander Tal
(86) International application number: PCT/JP2011/003778
(87) International publication number: WO 2013/005246

(57) **Abstract**

Safety is further improved in a report inquiry system 500 that provides slip data to a mobile terminal 31.

A mobile terminal management server 10 includes a business information temporary storage DB 16 for storing slip data to be provided to the mobile terminal 31; acquires the latest slip data from a slip data management server; updates the slip data stored in the business information temporary storage DB 16 by storing the acquired slip data in the business information temporary storage DB 16; determines whether to permit log-in of mobile terminals 31 to 3N or not when there is a log-in request from the mobile terminals 31 to 3N; carries out a log-in process in the case where it is determined to permit the log-in; receives a view request (provision request, search request) of slip data from the mobile terminals 31 to 3N of a log-in state for which the log-in process is carried out; and provides the slip data stored in the business information temporary storage DB 16 to the mobile terminals 31 to 3N in accordance with the received view request.

## Description

### CROSS REFERENCE TO RELATED APPLICATIONS

The present application is a U.S. national phase application under 35 U.S.C. §371 of PCT Application No. PCT/JP2011/003778, filed on July 1, 2011.

### Technical Field

The present invention relates to a mobile terminal management server that acquires slip data from a slip data management server, which manages the slip data generated for every business unit in a business process and provides the slip data via a communication network in response to a request from a mobile terminal used by a user, and to a mobile terminal management program mounted on the mobile terminal management server.

### Background Art

Heretofore, one so-called ERP (Enterprise Resource Planning) has become mainstream as package software for establishing a core business system for a company. In a core business system in which this ERP is contained, it is most often constructed on a relational database, and design of an application program that focuses on business processes is mostly made. Thus, it is often operated without focusing on a report output.

For the purpose of processing the large amount of business data at a high speed, analyzing the business data from various angles, and outputting reports under such a situation, various data warehouse systems that undertake a complementary role to the core business system have been provided (see Patent Literature 1).

In report inquiry systems intended to such a report output, one that provides information such as a report to a mobile communication terminal has been proposed (see Patent Literatures 2 and 3).

### Prior Art Literature

### Patent Literature

Patent Literature 1: Japanese Patent Application Publication No. 2002-312208
Patent Literature 2: Japanese Patent Application Publication No. 2003-323582
Patent Literature 3: Japanese Patent Application Publication No. 2007-200136

### Summary of the Invention

### Problems to be solved by the Invention

In the report inquiry system that provides information such as a report to a mobile communication terminal as described above, there is convenience that is capable of acquiring information even at an outside location or in motion. However, there has been a program that a risk of leakage of the information is increased. Therefore, in the report inquiry system for providing information such as a report and the like to the mobile communication terminal, one with high safety is required.

It is an object of the present invention to resolve the problems described above and to improve safety further in a business system for providing information on reports to a mobile communication terminal.

### Means for Solving the Problems

A mobile terminal management server according to the present invention is a mobile terminal management server for acquiring slip data from a slip data management server and providing the slip data to a mobile terminal via a communication network in response to a request from the mobile terminal used by a user, the slip data being generated for every business unit in a business process, the slip data management server managing the slip data, the mobile terminal management server including: a slip data storage section for storing slip data to be provided to the mobile terminal; a slip data acquiring section for acquiring the latest slip data from the slip data management server; a slip data updating section for updating the slip data stored in the slip data storage section by storing the slip data acquired by the slip data acquiring section in the slip data storage section; a log-in determining section for determining whether to permit log-in of the mobile terminal when there is a log-in request from the mobile terminal; a log-in processing section for carrying out a log-in process in the case where the log-in determining section determines to permit the log-in; a view request receiving section for receiving a view request of slip data from the mobile terminal of a log-in state for which the log-in processing section carries out the log-in process; and a slip data providing section for providing the slip data stored in the slip data storage section to the mobile terminal in accordance with the view request received by the view request receiving section.

By configuring it as described above, it is possible to improve safety further in a business system that provides information regarding reports to a mobile communication terminal.

The mobile terminal management server may be configured so as to further include: an update request receiving section for receiving an update request of slip data from the mobile terminal of the log-in state; a log-in requesting section for carrying out a log-in request to the slip data management server by presenting terminal information in the case where the update request receiving section receives the update request, the terminal information indicating the mobile terminal; and an update requesting section for carrying out the update request received by the update request receiving section to the slip data management server in the case where the slip data management server permits the log-in in response to the log-in request by the log-in requesting section.

The mobile terminal management server may be configured so as to further include: an update request receiving section for receiving an update request of slip data from the mobile terminal of the log-in state; an update related information accumulating section for accumulating update related information, the update related information containing the update content of the update request receive by the update request receiving section and terminal information indicating the mobile terminal that carried out the update request; and an update requesting section for transmitting, when it becomes predetermined timing, the update related information accumulated by the update related information accumulating section to the slip data management server in a lump and for carrying out the update request received by the update request receiving section in a lump.

The mobile terminal management server may be configured so that the mobile terminal includes a log-in determining section that permits log-in only in the case where a regular log-in operation defined in advance is received.

The mobile terminal management server may be configured so as to further include: a log-out processing section for carrying out a log-out process in the case where there is the log-out request from the mobile terminal, the log-in state being cancelled in the log-out process; and a history information deletion requesting section for requesting the mobile terminal to delete communication history information regarding provision of the slip data in the case where the log-out processing section carries out the log-out process.

The mobile terminal management server may be configured so as to further include: a time measuring section for measuring a period of time for which exchange of information with the mobile terminal of the log-in state has not been carried out; and a history information deletion requesting section for requesting the mobile terminal to delete communication history information regarding provision of the slip data in a case where the period of time measured by the time measuring section reaches a predetermined period of time.

Further, a mobile terminal management program is a mobile terminal management program for causing a mobile terminal management server to carry out a process to acquire slip data from a slip data management server and a process to provide the slip data to a mobile terminal via a communication network in response to a request from the mobile terminal used by a user, the mobile terminal management server managing the slip data generated for every business unit in a business process, the mobile terminal management server including a slip data storage section for storing the slip data to be provided to the mobile terminal, the mobile terminal management program causing the mobile terminal management server to execute: a slip data acquire process to acquire the latest slip data from the slip data management server; a slip data update process to update the slip data stored in the slip data storage section by storing the slip data acquired in the slip data storage section in the slip data acquire process; a log-in determination process to determine whether to permit log-in of the mobile terminal when there is a log-in request from the mobile terminal; a log-in process to carry out a process for log-in in the case where it is determined in the log-in determination process to permit the log-in; a view request receiving process to receive a view request of slip data from the mobile terminal of a log-in state for which the log-in process is carried out; and a slip data providing process to provide the slip data stored in the slip data storage section to the mobile terminal in accordance with the view request received in the view request receiving process.

### Effects of the Invention

According to the present invention, it becomes possible to improve safety further in a business system that provides information on reports to a mobile communication terminal.

### Brief Description of the Drawings

FIG. 1 is a block diagram showing a configuration example of a report inquiry system according to one embodiment of the present invention.
FIG. 2 is a block diagram showing a configuration example of a mobile terminal management server.
FIG. 3 is an explanatory drawing for explaining a process to update business data.
FIG. 4 is a flowchart showing an example of a business data providing process.
FIG. 5 is an explanatory drawing showing an example of a data search screen.
FIG. 6 is an explanatory drawing showing an example of a search result display screen.
FIG. 7 is a flowchart showing an example of a business data updating process.
FIG. 8 is an explanatory drawing showing an example of an editing screen.

### Mode for Carrying out the Invention

Hereinafter, an example of one embodiment according to the present invention will be described with reference to the drawings.

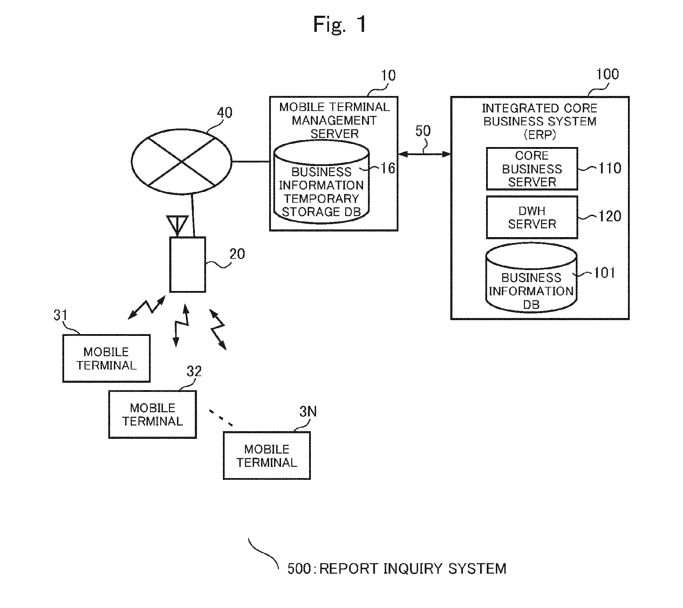

FIG. 1 is a block diagram showing a configuration example of a report inquiry system 500 according to one embodiment of the present invention. As shown in FIG. 1, the report inquiry system 500 includes a mobile terminal management server 10, a relay apparatus 20, a plurality of mobile terminals 31 to 3N ("N" is an arbitrary positive number), and an integrated core business system 100. The mobile terminal management server 10 is connected to each of the mobile terminals 31 to 3N via a communication network 40, such as the Internet, and the relay apparatus 20. The mobile terminal management server 10 is connected to the integrated core business system 100 via a communication network such as an LAN (Local Area Network), dedicated communication line and the like.

The integrated core business system 100 includes a core business server 110, a data warehouse server (DWH server) 120, and a business information DB 101. In this regard, the core business server 110 is connected to the DWH server 120 via a dedicated communication line.

The core business server 110 is a server managed by a data collector who is a collecting target of report data, for example, and has various kinds of functions for managing report information on various kinds of businesses. The core business server 110 is configured by a general information-processing apparatus provided with an OS (Operating System) and a relational DB. In this regard, the report is the general term of books and a type of slip. Further, the books denote one in which matters concerning accounts of money or goods are filled, and the slip denotes data that become a basis for creating books and constitute evidence of transactions and the like on a business. In the present embodiment, the case where the core business server 110 deals with only the slip data as report data will be described as an example.

The core business server 110 carries out various kinds of processes in accordance with business application programs. There are a sales business management program, a sales business management program, a production management program, a financial accounting management program, a managerial accounting management program and the like as the business application programs, for example.

The DWH server 120 is a server managed by a system manager of the present system, for example, and has various kinds of functions for realizing a data warehouse. Here, the data warehouse denotes a system to analyze the association among the individual items from among business data such as report data accumulated in time series. Further, the DWH server 120 has a function to register various kinds of data in a predetermined storage region (a business related data DB 101b, which will be described later) by converting a file with a CSV format transferred from the core business server 110 into a predetermined data format and the like. In this regard, the DWH server 120 may be configured to extract data according to the respective storage regions from a state of the CSV format without carrying out conversion of the data format.

The business information DB 101 includes a slip data DB 101a managed by the core business server 110 and a business related data DB 101b managed by the DWH server 120.

The slip data DB 101a is a storage medium for storing various kinds of slip data collected and marshaled by means of various kinds of information processing using various kinds of business application programs. In the slip data DB 101a, for example, received order slip header information, received order slip description information, delivery date schedules and the like are associated with slip data corresponding to a received order slip, and they are stored in a structure capable of retrieving them on the basis of a key, such as a slip number. In this regard, the slip number includes a received order number, a purchase order number, a shipment number, an acceptance or delivery number, a bill reference, a billing number, an accounting number and the like.

The core business server 110 has a function to convert various kinds of data (slip data) stored in the slip data DB 101a into a CSV (Comma Separated Values) format in accordance with a predetermined extracting condition and a function to transmit the converted data to the mobile terminal management server 10. In this regard, in the present embodiment, the core business server 110 transfers the data file converted into the CSV format to the mobile terminal management server 10 by means of an FTP (File Transfer Protocol).

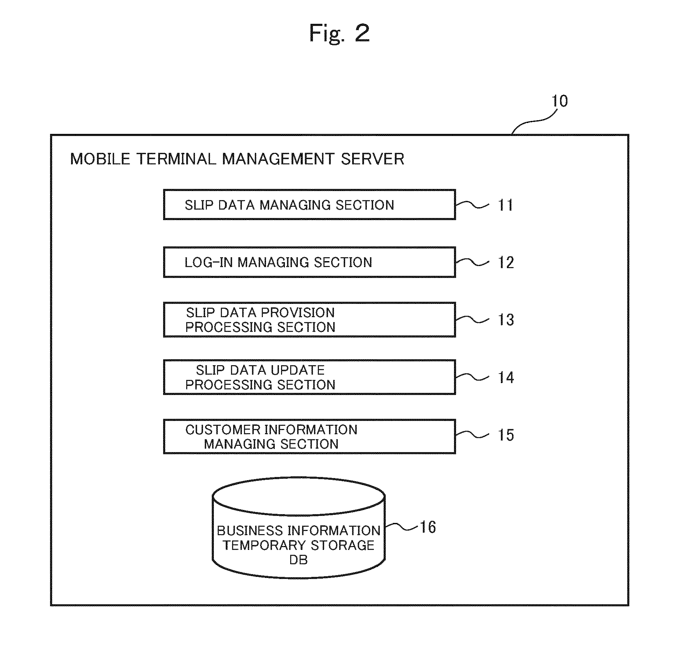

The mobile terminal management server 10 is configured by an information-processing apparatus such as a WWW server, for example, and is managed by a system manager of the present system 500. The mobile terminal management server 10 includes: a slip data managing section 11 that carries out a process regarding management of slip data; a log-in managing section 12 that carries out a process regarding management of log-in; a slip data provision processing section 13 that carries out a process to provide the slip data to the mobile terminals 31 to 3N; a slip data update processing section 14 that carries out a process to update the slip data in response to a request from the mobile terminals 31 to 3N; a customer information managing section 15 that carries out a process regarding management of customer information; and a business information temporary storage DB 16, for example, as shown in FIG. 2.

The business information temporary storage DB 16 is a storage medium for temporarily storing business data such as slip data acquired from the integrated core business system 100 side. The business data, such as the slip data, stored in the business information temporary storage DB 16 are updated at regular intervals (every day, every three days, every twelve hours or the like), for example.

Each of the mobile terminals 31 to 3N is an information-processing apparatus including a CPU (Central Processing Unit), a ROM, a RAM, a display section and the like, such as an Ipad (registered trademark), for example. In the present embodiment, each of the mobile terminals 31 to 3N has various kinds of applications available to deal with the report data, such as a Web browser. Further, in the present embodiment, each of the mobile terminals 31 to 3N has a function to define a query (a search item, a search key, an extract key and the like) for acquiring necessary report data from the mobile terminal management server 10 in response to an operation input by a user, for example, and a function to transmit the defined query to the mobile terminal management server 10.

In the present embodiment, each of the mobile terminals 31 to 3N has a function to communicate with the mobile terminal management server 10 via the relay apparatus 20 and the communication network 40, and a function to output the data acquired from the mobile terminal management server 10 to the display section by means of a function of software such as a predetermined Web application (Web browser), for example.

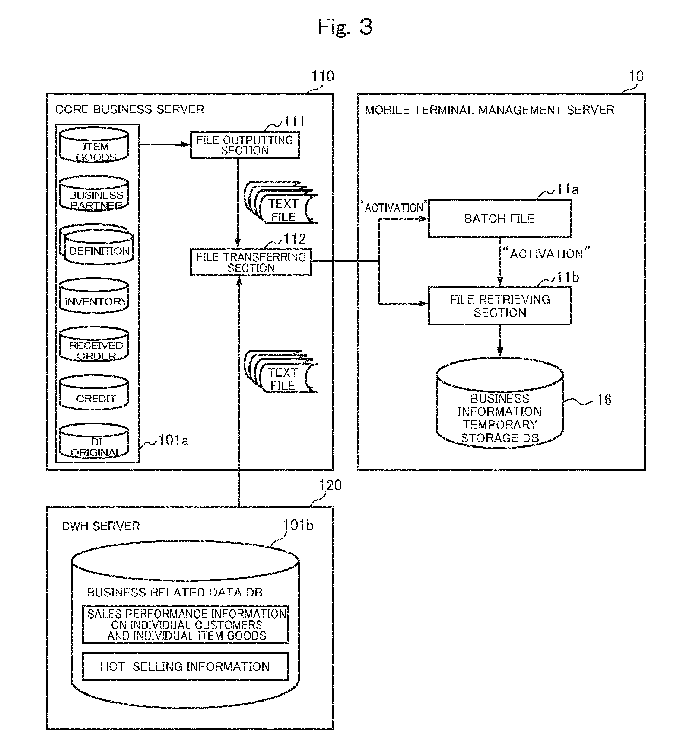

Here, a process to update business data such as the slip data stored in the business information temporary storage DB 16 will be described. FIG. 3 is an explanatory drawing for explaining a process to update business data. As shown in FIG. 3, when it becomes timing of data update (for example, a predetermined time defined in advance (2 a.m. or the like) in the case where they are updated every day), a file outputting section 111 in the core business server 110 reads out slip data (which become the latest data) stored in the slip data DB 101a with which the core business server 110 is provided, and transfers the read-out slip data to a file transferring section 112. Further, when it becomes a predetermined time defined in advance, the DWH server 120 similarly reads out the business data (which become the latest data) stored in the business related data DB 101b with which the DWH server 120 is provided, and transfers the business data to the file transferring section 112 with which the core business server 110 is provided. In this regard, as shown in FIG. 3, there are item goods data, business partner data, definition data, inventory data, received order data, credit data, BI original data and the like in the slip data stored in the slip data DB 101a, for example. Further, as shown in FIG. 3, there are sales performance information on individual customers and individual item goods, hot-selling information and the like in the business data stored in the business related data DB 101b, for example.

The file transferring section 112 included in the core business server 110 transmits the business data respectively received from the file outputting section 111 and the DWH server 120 to the mobile terminal management server 10. When business data (batch file 11a) are received, a file retrieving section 11b of the slip data managing section 11 in the mobile terminal management server 10 stores (newly saves or overwrite saves) the received business data in a predetermined storage region of the business information temporary storage DB 16, and the file retrieving section 11b thereby updates the information stored in the business information temporary storage DB 16. In this way, the information stored in the business information temporary storage DB 16 is updated by the batch process.

Next, an operation of the report inquiry system 500 according to the present embodiment will be described with reference to the drawings. In this regard, the content of operations and processes with no relationship to the present invention particularly may be omitted.

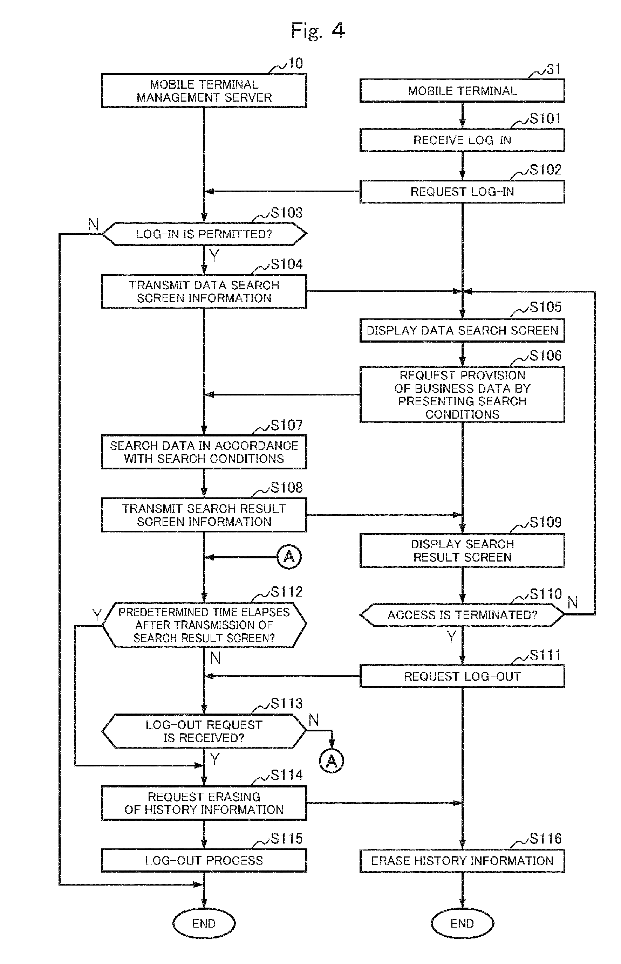

FIG. 4 is a flowchart showing an example of a business data providing process carried out by the mobile terminal management server 10 and the like in the report inquiry system 500 according to the present embodiment. Here, the case where business data are provided in response to a request from the mobile terminal 31 used by a user X will be described as an example.

In the business data providing process, the mobile terminal 31 first receives a log-in request by means of a log-in operation of the user X (Step S101). For example, an input operation of a personal identification number set up in advance is thought as this log-in operation. When log-in to the mobile terminal 31 is permitted, it is allowed to carry out various kinds of operations for utilizing various kinds of functions mounted on the mobile terminal 31.

In the case where a predetermined log-in operation is carried out by the user X when to log in the mobile terminal 31, the mobile terminal 31 accesses to the mobile terminal management server 10 to carry out a log-in request (Step S102). This log-in request is carried out by presenting predetermined information used for log-in determination defined in advance (for example, electronic certificate issued to the user X), for example.

When the log-in request is received, the log-in managing section 12 of the mobile terminal management server 10 determines whether to permit log-in or not (Step S103). This determination may be carried out by means of an ID, a password, electronic certificate or the like, for example.

In the case where it is determined to permit the log-in ("Yes" at Step S103), the log-in managing section 12 sets up the mobile terminal 31 to a log-in state. When it is set up to the log-in state, the slip data provision processing section 13 of the mobile terminal management server 10 transmits data search screen information indicating a data search screen to the mobile terminal 31 (Step S104). In this regard, in the case where it is determined not to permit the log-in ("No" at Step S103), the log-in managing section 12 terminates the process without setting up the log-in state. In this regard, in the case where it is determined not to permit the log-in, the log-in managing section 12 carries out a process to notify that effect of the mobile terminal 31.

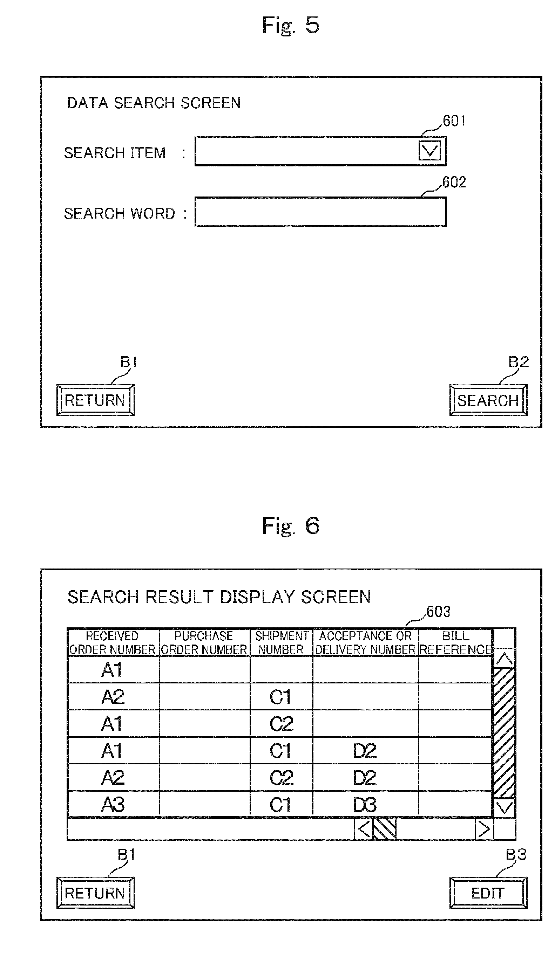

When the data search screen information is received, the mobile terminal 31 displays the data search screen indicated by the received the data search screen information on a display section included in the mobile terminal 31 itself (Step S105). FIG. 5 is an explanatory drawing showing an example of the data search screen. As shown in FIG. 5, a search item input region 601 for inputting an item (search item) that is a target of search, a search word input region 602 for inputting a keyword (search word) used when to search, a return button B1 to be pressed when to return to a previous screen, and a search button B2 to be pressed when to carry out the search are provided on the data search screen.

On the data search screen, the user X operates an operating section included in the mobile terminal 31 (for example, a keyboard displayed on the display section in which a touch panel is arranged) to input a search item and a search word and to press the search button B2. Items such as received order slip, inventory, business partners, trade names or the like are inputted as the search item, for example. Names of the business partners, names of goods or the like are inputted as the search word.

When a search item and a search word are inputted and the search button B2 is then pressed, the mobile terminal 31 presents the inputted search item and search word to the mobile terminal management server 10 as search conditions, and carries out a provision request of business data (Step S106). In this regard, the search conditions described above are one example, and they may be any other condition so long as they are searchable condition.

When the provision request of the business data is received, the mobile terminal management server 10 refers to the business information temporary storage DB 16, and searches the business data in accordance with the presented search conditions (Step S107).

When the business data are searched in accordance with the search conditions, the mobile terminal management server 10 transmits, to the mobile terminal 31, search result screen information indicating a search result screen for displaying the searched business data as a search result (Step S108).

When the search result screen information is received, the mobile terminal 31 displays the search result screen indicated by the received search result screen information on the display section included in the mobile terminal 31 itself (Step S109). FIG. 6 is an explanatory drawing showing an example of the search result screen. As shown in FIG. 6, a display region 603 for displaying the search result, a return button B1 to be pressed when to return to a previous screen, and an editing button B3 to be pressed when editing of the search result is carried out are provided in the search result screen.

Then, in the case where an operation to terminate the access, such as an operation to terminate a browser by the user X, is made ("Yes" at Step S110), the mobile terminal 31 carries out a log-out request to the mobile terminal management server 10 (Step S111). In this regard, in the case where an operation to continue the access, such as pressing of the return button B1, is made ("No" at Step S110), the mobile terminal 31 shifts to the process at Step S105 to display the data search screen.

When the search result screen information is transmitted at Step S108, the log-in managing section 12 starts to measure a period of time (waiting time) for which exchange of information with the mobile terminal 31 is not carried out, and monitors whether a predetermined period of time (for example, five minutes, ten minutes, thirty minutes or the like) elapses as this waiting time (it reaches the predetermined period of time) or not (Step S112).

When the log-out request is received during measurement of the waiting time ("Yes" at Step S113), the log-in managing section 12 suspends measurement of the waiting time, carries out an erasing request of history information (communication history information, operation history information and the like) by this communication with the mobile terminal 31 (Step S114), and carries out a log-out process to cancel the log-in state (Step S115).

Further, in the case where it is determined that the predetermined period of time elapses as the waiting time ("Yes" at Step S112), the log-in managing section 12 terminates the measurement of the waiting time, carries out the erasing request of the history information (communication history information, operation history information and the like) by this communication with the mobile terminal 31 (Step S114), and carries out the log-out process to cancel the log-in state (Step S115).

Then, when the erasing request of the history information is received, the mobile terminal 31 carries out a process to erase the history information accumulated by this communication with the mobile terminal management server 10 (Step S116).

As described above, the process to determine whether to permit the log-in to the mobile terminal management server 10 in response to the log-in request from the mobile terminal 31 that becomes operable by means of the log-in process; the process to receive the provision request of the business data in the case of permission; and the process to provide the business data in accordance with the request are carried out.

By carrying out the process to provide the business data as described above, it is possible to carry out authentication doubly at Step S101 and Step S103. Further, it is possible to eliminate necessity to access to the integrated core business system 100. For this reason, it is possible to improve safety when to provide the business data to the mobile terminal 31.

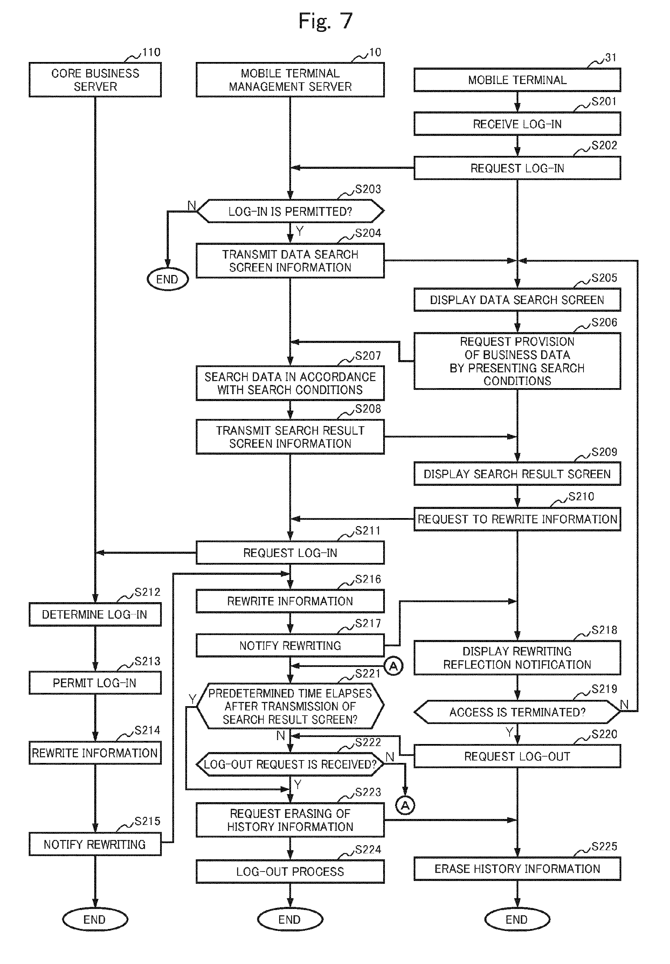

FIG. 7 is a flowchart showing an example of a business data updating process carried out by the core business server 110, the mobile terminal management server 10 and the mobile terminal 31. Here, the case where business data are updated in response to a request from the mobile terminal 31 used by the user X will be described as an example.

Processes at Steps S201 to S209 in the business data updating process are similar to the processes at Steps S101 to S109 in the business data providing process described above, and processes at Steps S219 to S225 in the business data updating process are similar to the processes at Steps S110 to S116 in the business data providing process described above. For this reason, detailed explanation of Steps S201 to S209 and S219 to S225 in the business data updating process is omitted.

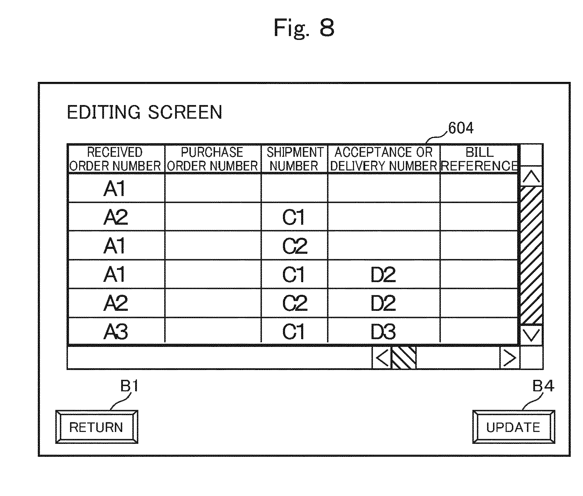

When pressing of the editing button B3 is received after the search result screen indicated by the search result screen information (see FIG. 6) is displayed on the display section included in the mobile terminal 31 at Step S209 in the business data updating process, the mobile terminal 31 displays an editing screen in which the search result displayed in the display region 603 can be edited. FIG. 8 is an explanatory drawing showing an example of the editing screen. As shown in FIG. 8, an editing region 604 for editably displaying the search result; a return button B1 to be pressed when to return to a previous screen; and an update button B4 to be pressed when to reflect the edited result to the business data saved at the servers 10, 110 sides are provided on the editing screen.

The user X operates the mobile terminal 31 to carry out an operation to edit the business data displayed as the search result by adding (for example, new registration of a slip), erasing, or changing the business data displayed in the editing region 604 on the editing screen. Then, in the case where the edited result is reflected to the business data saved at the servers 10, 110 sides after the editing operation is terminated, the user X operates the mobile terminal 31 to press the update button B4.

In the case where pressing of the update button B4 is received, the mobile terminal 31 carries out an information rewriting request for requesting the mobile terminal management server 10 to reflect the edited result (Step S210). The edited content, mobile terminal management server information regarding the mobile terminal management server 10 (for example, electronic certificate issued to the mobile terminal management server 10), user information regarding the user X (for example, electronic certificate issued to the user X, or the like) and the like are presented in this request.

When the information rewriting request is received, the mobile terminal management server 10 carries out access to the core business server 110, and carries out a log-in request (Step S211). This log-in request is carried out by presenting predetermined information defined in advance and used for the log-in determination (for example, electronic certificate issued to the mobile terminal management server 10, electronic certificate issued to the user X, and the like), for example.

When the log-in request is received, the core business server 110 determines whether to permit the log-in or not (Step S212). This determination may be carried out by means of an ID, a password, electronic certificate or the like, for example.

In the case where the core business server 110 determines to permit the log-in, the core business server 110 sets up the mobile terminal management server 10 to a log-in state with respect to receiving of information from the mobile terminal 31 (Step S213). When it is set up to the log-in state, the core business server 110 carries out a process to rewrite the corresponding business data saved in the business information DB 101 in accordance with the edited content inputted from the mobile terminal 31 via the mobile terminal management server 10 (Step S214). The core business server 110 then transmits rewriting notification for notifying rewriting in accordance with the edited content to the mobile terminal management server 10 (Step S215). The core business server 110 then carries out a log-out process.

When the rewriting notification is received, the mobile terminal management server 10 carries out a process to rewrite the corresponding business data stored in the business information temporary storage DB 16 in accordance with the edited content inputted from the mobile terminal 31, as well as the core business server 110 (Step S216). The mobile terminal management server 10 then transmits rewriting notification for notifying the rewriting in accordance with the edited content to the mobile terminal 31 (Step S217).

When the rewriting notification is received, the mobile terminal 31 displays rewriting reflection notification for informing the user X that the mobile terminal 31 reflects the edited result to a predetermined region of the editing screen (Step S218).

Then, the processes after Step S219 are carried out as well as the business data providing process described above.

As described above, it is determined whether to permit the log-in to the mobile terminal management server 10 or not in response to the log-in request from the mobile terminal 31 that becomes operable by the log-in process; the rewriting request for the business data is received in the case of permission; the log-in request is carried out to the core business server 110 in the case where the rewriting request is received; the process to rewrite the business data is carried out in the core business server 110 in the case of permission; and the process to rewrite the business data is also similarly carried out in the mobile terminal management server 10.

By carrying out the rewriting process of the business data as described above, it is possible to carry out authentication trebly at Step S201, Step S203 and Step S212. Further, it is possible to prohibit direct access from the mobile terminal 31 to the integrated core business system 100. For this reason, it is possible to improve safety when to update the business data in response to the request from the mobile terminal 31.

In the embodiment described above, the mobile terminal management server 10 is configured so that: the mobile terminal management server 10 carries out a log-in request to the core business server 110 whenever a rewriting request is received from the mobile terminal 31; and the core business server 110 carries out the process to rewrite the business data. However, the mobile terminal management server 10 may be configured so as to: accumulate information (information necessary for authentication) regarding the mobile terminals 31 to 3N each of which becomes a requester for the edited content and rewriting in the case where the rewriting request is received from the mobile terminals 31 to 3N; and carry out the rewriting request to the core business server 110 by a batch process at predetermined timing (for example, at 11 p.m. every day, or the like). In this case, the log-in request may be carried out at predetermined timing by presenting the information regarding each of the mobile terminals 31 to 3N that becomes a requester for rewriting, and only the edited content for which a terminal device whose log-in is permitted is a requester for rewriting may be reflected to the business data in the core business server 110.

Namely, the mobile terminal management server 10 may be configured so as to: receive the update request of the slip data from the mobile terminal 31 to 3N in a log-in state; accumulate update related information containing the received update content of the update request (the edited content) and the terminal information indicating the mobile terminal 31 to 3N that carried out the update request (for example, the electronic certificate) (for example, accumulate them in the storage medium with which the mobile terminal management server 10 is provided); transmit, when it becomes predetermined timing (for example, at 11 p.m. every day, or the like), the accumulated update related information to the slip data management server (for example, the core business server 110) in a lump; and carry out the update request received from each of the mobile terminals 31 to 3N that is in a log-in state in a lump. By configuring it in this manner, it becomes possible to reduce the number of accesses to the core business server 110 drastically, and it becomes possible to improve safety further.

As explained above, in the embodiment described above, the mobile terminal management server 10 for acquiring slip data from the slip data management server (for example, the core business server 110) and providing the slip data to the mobile terminals 31 to 3N via the communication network 40 in response to a request from the mobile terminals 31 to 3N respectively used by the users, in which the slip data are generated for every business unit in a business process and the slip data management server manages the slip data, the mobile terminal management server 10 is configured so as to: include the business information temporary storage DB 16 for storing slip data to be provided to the mobile terminals 31 to 3N; acquire the latest slip data from the slip data management server; update the slip data stored in the business information temporary storage DB 16 by storing the acquired slip data in the business information temporary storage DB 16; determine whether to permit log-in of the mobile terminals 31 to 3N when there is a log-in request from the mobile terminals 31 to 3N; carry out a log-in process in the case where it is determined to permit the log-in; receive a view request (a provision request, a search request) of the slip data from the mobile terminals 31 to 3N of the log-in state for which the log-in process is carried out; and provide the slip data stored in the business information temporary storage DB 16 to the mobile terminals 31 to 3N in response to the received view request. Therefore, in the business system (the report inquiry system 500) that provides the information (for example, the slip data) regarding the reports to the mobile communication terminal (the mobile terminals 31 to 3N), it becomes possible to improve safety further.

Namely, the mobile terminal management server 10 is configured so as to: transfer the slip data to the mobile terminal management server 10 from the core business server 110; and provide the slip data to the mobile terminals 31 to 3N each of which is permitted to log in this mobile terminal management server 10. Therefore, it becomes possible to provide the slip data from the mobile terminal management server 10 to the mobile terminals 31 to 3N authenticated by the mobile terminal management server 10 without accessing to the core business server 110, and it becomes possible to improve safety when to provide the business data to the mobile terminals 31 to 3N.

Further, in the embodiment described above, the mobile terminal management server 10 is configured so as to: receive an update request of slip data from the mobile terminals 31 to 3N of the log-in state; carry out a log-in request to the slip data management server (for example, the core business server 110) by presenting terminal information (for example, electronic certificate issued for a terminal or user) in the case where the update request is received, the terminal information indicating the mobile terminals 31 to 3N; and carry out the update request to the slip data management server in the case where the slip data management server permits the log-in in response to the log-in request. Therefore, it becomes possible to improve safety when to update the business data in response to the request from the mobile terminals 31 to 3N. Namely, the mobile terminal management server 10 is configured so as to permit the update of the business data in the case where double authentication is obtained by the mobile terminal management server 10 and the slip data management server without direct access to the slip data management server from the mobile terminals 31 to 3N. Therefore, it becomes possible to improve safety when to update business data.

Further, in the embodiment described above, the mobile terminal management server 10 is configured so that the log-in is permitted in the case where the mobile terminals 31 to 3N receive a regular log-in operation defined in advance. Therefore, it is possible to require authentication at the mobile terminals 31 to 3N, and it is thus possible to require double or triple authentication. This makes it possible to heighten safety further.

Further, in the embodiment described above, the mobile terminal management server 10 is configured so as to: carry out the log-out process to cancel the log-in state in the case where there is the log-out request from the mobile terminals 31 to 3N; and request the mobile terminals 31 to 3N to delete the communication history information regarding provision of the slip data in the case where the log-out process is carried out. Therefore, it becomes possible to erase the communication history information, and this makes it possible to prevent the information from being leaked due to loss of the mobile terminals 31 to 3N and the like.

Further, in the embodiment described above, the mobile terminal management server 10 is configured so as to: measure a period of time for which exchange of information with the mobile terminals 31 to 3N of the log-in state is not carried out; and request the mobile terminals 31 to 3N to delete the communication history information regarding provision of the slip data in the case where the measured period of time reaches the predetermined period of time. Therefore, it becomes possible to erase the communication history information, and this makes it possible to prevent the information from being leaked due to loss of the mobile terminals 31 to 3N and the like.

In this regard, although it has not been mentioned in the embodiment described above, the mobile terminal management server 10 carries out each of the processes (see FIG. 4 and FIG. 7) in accordance with processing programs (the mobile terminal management program) stored in a storage medium included in the mobile terminal management server 10 itself.

### Industrial Applicability

According to the present invention, it is useful to improve safety in a business system that provides information on reports to a mobile communication terminal.

### Explanation of Reference numerals

- 10: mobile terminal management server
- 20: relay apparatus
- 31 to 3N: mobile terminal
- 40: communication network
- 50: communication network
- 100: integrated core business system
- 110: core business server
- 120: DWH server
- 500: report inquiry system

## Claims

1. A mobile terminal management server for acquiring slip data from a slip data management server and providing the slip data to a mobile terminal via a communication network in response to a request from the mobile terminal used by a user, the slip data being generated for every business unit in a business process, the slip data management server managing the slip data, the mobile terminal management server comprising:
a slip data storage section for storing slip data to be provided to the mobile terminal;
a slip data acquiring section for acquiring the latest slip data from the slip data management server;
a slip data updating section for updating the slip data stored in the slip data storage section by storing the slip data acquired by the slip data acquiring section in the slip data storage section;
a log-in determining section for determining whether to permit log-in of the mobile terminal when there is a log-in request from the mobile terminal;
a log-in processing section for carrying out a log-in process in the case where the log-in determining section determines to permit the log-in;
a view request receiving section for receiving a view request of slip data from the mobile terminal of a log-in state for which the log-in processing section carries out the log-in process; and
a slip data providing section for providing the slip data stored in the slip data storage section to the mobile terminal in accordance with the view request received by the view request receiving section.

2. The mobile terminal management server according to claim 1, further comprising:
an update request receiving section for receiving an update request of slip data from the mobile terminal of the log-in state;
a log-in requesting section for carrying out a log-in request to the slip data management server by presenting terminal information in the case where the update request receiving section receives the update request, the terminal information indicating the mobile terminal; and
an update requesting section for carrying out the update request received by the update request receiving section to the slip data management server in the case where the slip data management server permits the log-in in response to the log-in request by the log-in requesting section.

3. The mobile terminal management server according to claim 1, further comprising:
an update request receiving section for receiving an update request of slip data from the mobile terminal of the log-in state;
an update related information accumulating section for accumulating update related information, the update related information containing the update content of the update request receive by the update request receiving section and terminal information indicating the mobile terminal that carried out the update request; and
an update requesting section for transmitting, when it becomes predetermined timing, the update related information accumulated by the update related information accumulating section to the slip data management server in a lump and for carrying out the update request received by the update request receiving section in a lump.

4. The mobile terminal management server according to any one of claims 1 to 3, wherein the mobile terminal includes a log-in determining section that permits log-in only in the case where a regular log-in operation defined in advance is received.

5. The mobile terminal management server according to any one of claims 1 to 4, further comprising:
a log-out processing section for carrying out a log-out process in the case where there is the log-out request from the mobile terminal, the log-in state being cancelled in the log-out process; and
a history information deletion requesting section for requesting the mobile terminal to delete communication history information regarding provision of the slip data in the case where the log-out processing section carries out the log-out process.

6. The mobile terminal management server according to any one of claims 1 to 5, further comprising:
a time measuring section for measuring a period of time for which exchange of information with the mobile terminal of the log-in state has not been carried out; and
a history information deletion requesting section for requesting the mobile terminal to delete communication history information regarding provision of the slip data in a case where the period of time measured by the time measuring section reaches a predetermined period of time.

7. A mobile terminal management program for causing a mobile terminal management server to carry out a process to acquire slip data from a slip data management server and a process to provide the slip data to a mobile terminal via a communication network in response to a request from the mobile terminal used by a user, the mobile terminal management server managing the slip data generated for every business unit in a business process, the mobile terminal management server comprising a slip data storage section for storing the slip data to be provided to the mobile terminal, the mobile terminal management program causing the mobile terminal management server to execute:
a slip data acquire process to acquire the latest slip data from the slip data management server;
a slip data update process to update the slip data stored in the slip data storage section by storing the slip data acquired in the slip data storage section in the slip data acquire process;
a log-in determination process to determine whether to permit log-in of the mobile terminal when there is a log-in request from the mobile terminal;
a log-in process to carry out a process for log-in in the case where it is determined in the log-in determination process to permit the log-in;
a view request receiving process to receive a view request of slip data from the mobile terminal of a log-in state for which the log-in process is carried out; and
a slip data providing process to provide the slip data stored in the slip data storage section to the mobile terminal in accordance with the view request received in the view request receiving process.
